# EUROPEAN PATENT SPECIFICATION

(11) **EP 4 541 442 B1**
(45) Date of publication and mention of the grant of the patent: **05.08.2026**
(21) Application number: 23461669.6
(22) Date of filing: 17.10.2023
(51) Int. Cl.: B01D 1/00, B01D 1/30, H01C 1/08, H01C 3/00

(54) **DEMISTER HEATER**
ENTNEBELUNGSERHITZER
DISPOSITIF DE CHAUFFAGE DE DÉVÉSICULEUR

(43) Date of publication of application: 23.04.2025
(73) Proprietor: Goodrich Corporation, Charlotte, NC 28217 (US)
(72) Inventor: Kroczek, Piotr, 51-317 Wroclaw (PL); SWIRNIAK, Pawel, 51-317 Wroclaw (PL); SLOMIANY, Krzysztof, 51-317 Wroclaw (PL); MROCZKOWSKI, Piotr, 51-317 Wroclaw (PL)
(74) Representative: Dehns

(56) References cited:
- EP-A1- 3 156 393
- EP-A2- 0 824 299
- WO-A1-96/21336
- CN-U- 207 381 194
- US-A- 5 573 687
- US-A1- 2023 268 104

## Description

### TECHNICAL FIELD

The present disclosure relates to a demister as used for separate moisture and waste particles from air in e.g. a waste system such as, but not exclusively an aircraft lavatory waste system. More specifically, the disclosure relates to a demister heating arrangement.

### BACKGROUND

Demisters are a type of filter for removing moisture or particles from air. A demister is often used in a waste system such as an aircraft lavatory waste system. Waste is conveyed to waste tanks by means of pressurised air from e.g. a vacuum source that forces the waste from e.g. the lavatory along pipes into a waste tank. The waste may include liquid and/or solid waste. The waste is deposited by the air flow into the tank and the air is then vented from the tank e.g. into the atmosphere. The waste collects in the tank (this may be separated from the air by a separator such as a centrifugal separator, or may just collect in the tank due to gravity) and can be disposed of by emptying the tank e.g. when full or at intervals. Whilst the air is transporting the waste to the tank, however, some of the waste liquid or particles, particularly lighter drops or particles, may be absorbed by the air and carried out with the air exiting the tank. It is undesirable, and sometimes specifically not permitted, for contaminated air to be released into the atmosphere or other environment outside of the tank. Typically, therefore, a demister is provided to filter the air and remove such waste droplets/particles before the air is vented. A demister may be e.g. a tube through which the air flows having a filter or mesh of e.g. densely knitted metal, nylon, polypropylene etc. to trap the moisture/particles from the air. Whilst such demisters can be located in the tanks themselves, it is more common, to maintain maximum tank capacity and for e.g. ease of maintenance, for the demister to be located external of the tank. Whilst externally mounted demisters have advantages, the external location can have problems. In particular when the demister is used in extreme environments where very cold temperatures can be reached, the demister can be susceptible to freezing. The moisture collected by the demister can freeze. The ice can build up to render the demister filter inoperable and/or reduce the diameter of the tube through which the air flows. This problem can occur in extreme temperature environments such as those to which aircraft are exposed.

To mitigate this problem, heaters have been mounted around the demister to avoid freezing of the moisture. Such heaters may be e.g. silicone heaters that are assembled externally around the demister tube. An example of a demister heater with a tubular body is disclosed in CN207381194U.

Whilst such heaters have proven effective in addressing the problems of ice build-up, they are not completely effective and ice build up can still form within the demister and reduce its effectiveness. There is, therefore, a need for an improved demister heating arrangement.

### SUMMARY

According to this disclosure, there is provided a demister heater as defined by claim 1.

To further improve the heating effect inside the demister tube, a thermal insulator sleeve may also be provided around the tubular heater body. This sleeve would be located between the heater body and the inner wall of the demister tube, in use, to reduce outward heat loss.

In addition, in some examples, a seal may be provided at the end of the heater tube. Also provided is a demister comprising a demister cap and a demister tube in fluid communication with the demister cap, and through which air flows, and a demister heater as defined above located in the demister tube.

Also provided is a waste system comprising a waste tank and a demister as defined above.

### BRIEF DESCRIPTION

Examples of the demister heater according to this disclosure will now be described with reference to the drawings. It should be noted that these are examples only and that variations are possible within the scope of the claims.
Figure 1 shows a typical waste system with an externally mounted demister, for explanatory purposes.
Figure 2 is an end view of a known demister without a heater.
Figure 3 is an end view of a demister with an externally mounted heater.
Figure 4 shows a demister with a heater according to this disclosure.
Figure 5 is an end view of a demister such as shown in Fig. 4.
Figure 6 is a cross-sectional view of a demister such as shown in Fig. 4 and 5.
Figure 7 shows a view of a demister heater according to the disclosure.
Figure 8 is an exploded view of a demister heater as shown in Fig. 7.
Figure 9 shows the conductive element of a demister heater according to the invention.
Figure 10 shows one alternative connector portion for a demister heater according to this disclosure.
Figure 11 shows another alternative connector portion for a demister heater according to this disclosure.

### DETAILED DESCRIPTION

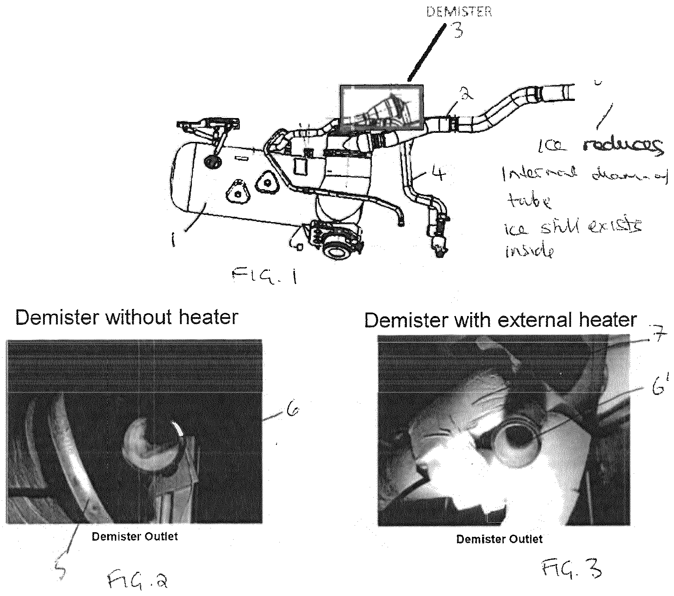

Figure 1 shows an example of a waste system having an externally mounted demister.

The waste system includes a waste tank 1, pipes 2 connected to e.g. the lavatory or other source of waste, through which the waste flows into the tank and pipes 4 connected to a vacuum source for creating a negative pressure in the pipes 2 to draw the waste into the tank, as described above. A demister 3 is mounted externally to the tank 1 and acts to filter moisture or contaminants from the air being vented from the tank after the waste has been deposited in the tank.

The demister can be seen close-up in Fig. 2 which shows the demister cap 5, which connects to the tank at the air outlet of the tank, and the demister tube 6 through which the air flows and where the demister material collects the moisture and contaminants from the air before it exits the demister. In the example in Fig. 2, no heating is provided and the diameter of the demister tube can become restricted due to the build-up of ice when temperatures are very cooled.

In the example of Fig. 3, an external heater, e.g. a silicone heater 7 is assembled around the outside of the demister tube 6' to warm the tube to reduce the build-up of ice in the tube. In one test, it was shown that a demister without a heater may have its diameter reduced by 40% due to ice build-up, and when an external heater is used, the reduction in diameter can be reduced to 20%.

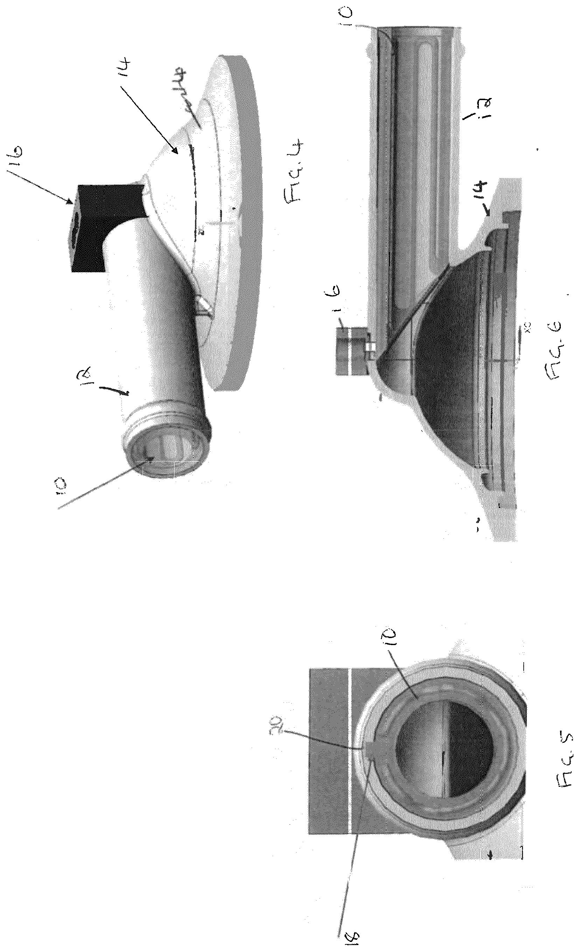

The heating effect has been improved by the heater according to this disclosure, which will be described with reference to Figs. 4 to 11.

The heater of this disclosure is a thin-walled tubular inner heater that can be fitted into the demister tube and provides inwardly directed heating into the demister tube through which the air passes. Figures 4, 5 and 6 show the heater 10 fitted into the demister tube 12. The demister tube 12 is in fluid connection, as is known, with the demister cap 14 which is arranged to fit to the tank outlet, in use. An electrical connector 16 is provided to connect the heater to a power supply. In this example, the electrical connector 16 is provided at one end of the demister tube, adjacent the demister cap 14 but other locations are also possible for the connector. Electric power is supplied to the heater via the connector 16 and heat from the heater is directed inwards in the tube which is the location where ice would be typically formed.

To prevent the heater rotating or sliding linearly relative to the tube, in use, it may be secured in various ways e.g. by bonding, adhesive, snap-fit, threaded connection etc. In the example shown here, best seen in Fig. 5, the heater is provided with a locating key feature 18 with engages with a mating slot or recess 20 formed in the demister tube. In one example, a poka-yoke key may be used to ensure precise location in one orientation only.

The heater will reduce the diameter of the demister tube by a small amount (less than would be caused by ice formation). This reduction may be acceptable. Alternatively, the tube can be made slightly bigger to compensation for the heater.

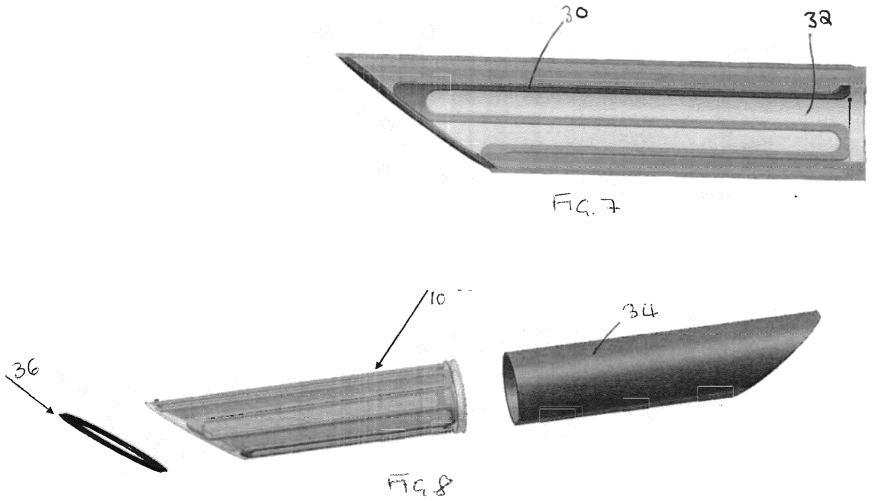

The structure of the heater will be described in further detail, with reference to Figs. 7 to 11.

The heater is formed as a tubular body comprising a spirally wound electrically conductive wire 30 which is embedded in a highly thermally conductive resin 32 that is formed into a tube. The spiral wire heats up due to the resistive effect, when electric power is applied to the ends of the wire. The resin 32 serves to transfer the heat from the wire around the heater tube and also protects the wire against damage. The resin, with the embedded wire, may be formed from a sheet that is then shaped into a tube, of may be formed by over-molding or other known process.

In addition, to further improve heating and to reduce outward heat loss, a thermal insulator sleeve 34 may be provided around the heater tube. This functions to direct the heat from the heater radially inwards into the tube rather than outwards. The sleeve 34 may also provide some cushioning to protect the heater tube from abrasion against the demister tube.

To reduce leakage of the vacuum, a seal 36 may also be provided at the outlet end of the heater.

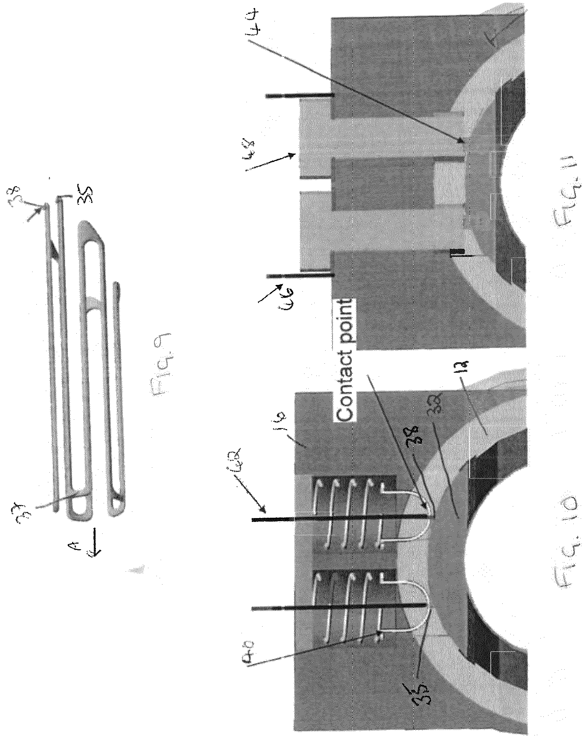

The spiral shape of the heater wire 30, according to the invention, can be seen more clearly in Fig. 9. The wire starts at a first end 35 and then extends into a spirally wound shape extending in the axial, A direction, then turning 37 and extending back in the opposite direction, then turning 39 and so on, with the spiral wire also being formed into a tubular shape, and then ending at a second wire end 38. The wire ends 35. 38 form the terminals for connection to the power supply. This may be a direct connection with a power supply or may be via a connector 16 e.g. as shown in Fig. 4.

Figs. 10 and 11 show, as examples, two possible ways of providing connection between the heater and the power supply. In the example in Fig. 10, the wire ends 35, 38 are connected, after assembly, to connection ports 40 which are in electrical connection with electric supply wires 42 which extend through the connector 16.

In the example in Fig. 11, the wire ends 35, 38 are formed as contact points 44 and make electrical connection, after assembly, with an electrical harness or washer 46 via screws 48 through the connector 16. Other connection to the power supply is also possible.

The heater of this disclosure can be easily incorporated into existing demister tubes and are at a location where it can most effectively and efficiently prevent ice build-up at the place it can cause most problems. Further, the internal location of the heater protects it from damage.

## Claims

1. A demister heater comprising a tubular heater body (10) comprising a spirally wound electrical conductor wire formed into a tube (30) embedded in a highly thermally conductive resin (32), the tubular body sized to fit within a demister tube through which air passes, wherein the wire starts at a first end (35) and then extends into a spirally wound shape extending in an axial direction, then turning (37) and extending back in the opposite direction, then turning (39) and so on, with the spiral wire also being formed into a tubular shape, and then ending at a second wire end (38) whereby the wire ends (35,38) form the terminals for connection to the power supply.

2. The demister heater of claim 1, further comprising a sleeve (34) of thermally insulative material around the tubular heater body.

3. The demister heater of any preceding claim, further comprising a seal ring (36) at an end of the tubular body.

4. The demister heater of any preceding claim, further comprising an engagement feature for securing the heater inside a demister tube, in use.

5. The demister heater of claim 4, wherein the engagement feature includes a key extending outwards from the heater body.

6. The demister heater of any preceding claim, further comprising a connector to electrically connect the electrical conductor (30) to a power supply.

7. The demister heater of claim 6, further comprising connector ports (40) having connector wires (42) in the connector, the connector ports electrically connecting to ends (35, 38) of the electrical conductor.

8. The demister heater of claim 6, having contact points at ends (35. 38) of the electrical conductor and further comprising screws (48) extending through the connector (16) to electrically connect with the contact points.

9. A demister comprising a demister cap (14) and a demister tube (12) in fluid communication with the demister cap, and through which air flows, and a demister heater (10) as claimed in any preceding claim, located in the demister tube.

10. The demister of claim 9, further comprising an engagement feature for engaging with the heater.

11. A waste system comprising a waste tank and a demister as claimed in claim 9 or 10 at an outlet of the tank.

## Patentansprüche

1. Entnebelungserhitzer, umfassend einen rohrförmigen Erhitzerkörper (10), der einen spiralig gewickelten elektrischen Leiterdraht umfasst, welcher zu einem Rohr (30) geformt ist, das in einem hochgradig wärmeleitfähigen Harz (32) eingebettet ist; wobei der rohrförmige Körper so dimensioniert ist, dass er in ein Entnebelungsrohr passt, durch das Luft strömt; wobei der Draht an einem ersten Ende (35) beginnt und sich dann in eine spiralig gewickelte Form erstreckt, die sich in einer axialen Richtung erstreckt; dann umbiegt (37) und sich in der entgegengesetzten Richtung zurückerstreckt; dann umbiegt (39) und so weiter, wobei der Spiraldraht ebenfalls zu einer Rohrform geformt ist; und dann an einem zweiten Drahtende (38) endet, wodurch die Drahtenden (35,38) die Anschlüsse zur Verbindung mit der Stromversorgung bilden.

2. Entnebelungserhitzer nach Anspruch 1, ferner umfassend eine Hülse (34) aus wärmeisolierendem Material um den rohrförmigen Erhitzerkörper.

3. Entnebelungserhitzer nach einem der vorhergehenden Ansprüche, ferner umfassend einen Dichtring (36) an einem Ende des rohrförmigen Körpers.

4. Entnebelungserhitzer nach einem der vorhergehenden Ansprüche, ferner umfassend ein Eingriffsmerkmal zum Sichern des Erhitzers im Inneren eines Entnebelungsrohrs bei der Verwendung.

5. Entnebelungserhitzer nach Anspruch 4, wobei das Eingriffsmerkmal eine Passfeder beinhaltet, die sich von dem Erhitzerkörper nach außen erstreckt.

6. Entnebelungserhitzer nach einem der vorhergehenden Ansprüche, ferner umfassend einen Verbinder, um den elektrischen Leiter (30) elektrisch mit einer Stromversorgung zu verbinden.

7. Entnebelungserhitzer nach Anspruch 6, ferner umfassend Verbinderanschlüsse (40), die Verbinderdrähte (42) in dem Verbinder aufweisen; wobei die Verbinderanschlüsse elektrisch mit Enden (35, 38) des elektrischen Leiters verbinden.

8. Entnebelungserhitzer nach Anspruch 6, der Kontaktpunkte an Enden (35. 38) des elektrischen Leiters aufweist; und ferner Schrauben (48) umfasst, die sich durch den Verbinder (16) erstrecken, um sich elektrisch mit den Kontaktpunkten zu verbinden.

9. Entnebeler, umfassend eine Entnebelerkappe (14) und ein Entnebelerrohr (12) in Fluidverbindung mit der Entnebelerkappe und durch welches Luft strömt; und einen in dem Entnebelerrohr angeordneten Entnebelungserhitzer (10) nach einem der vorhergehenden Ansprüche.

10. Entnebeler nach Anspruch 9, ferner umfassend ein Eingriffsmerkmal zum Eingreifen in den Erhitzer.

11. Abfallsystem, umfassend einen Abfalltank und einen Entnebeler nach Anspruch 9 oder 10 an einem Auslass des Tanks.

## Revendications

1. Dispositif chauffant pour désembueur comprenant un corps chauffant tubulaire (10) comprenant un fil conducteur électrique enroulé en spirale en forme de tube (30) intégré dans une résine hautement conductrice thermiquement (32), le corps tubulaire étant dimensionné pour s'insérer dans un tube de désembueur à travers lequel passe de l'air, le fil partant à une première extrémité (35) et s'étendant ensuite sous une forme enroulée en spirale dans une direction axiale, puis tournant (37) et s'étendant en sens inverse, puis tournant (39) et ainsi de suite, le fil spiralé étant également mis sous une forme tubulaire, et se terminant ensuite à une seconde extrémité de fil (38), moyennant quoi les extrémités de fil (35, 38) forment les bornes de connexion à l'alimentation électrique.

2. Dispositif chauffant pour désembueur selon la revendication 1, comprenant en outre un manchon (34) fait dans un matériau thermiquement isolant autour du corps chauffant tubulaire.

3. Dispositif chauffant pour désembueur selon une quelconque revendication précédente, comprenant en outre une bague d'étanchéité (36) à une extrémité du corps tubulaire.

4. Dispositif chauffant pour désembueur selon une quelconque revendication précédente, comprenant en outre un dispositif de mise en prise pour fixer l'élément chauffant à l'intérieur d'un tube de désembueur, en cours d'utilisation.

5. Dispositif chauffant pour désembueur selon la revendication 4, dans lequel l'élément de mise en prise comporte une clé s'étendant vers l'extérieur du corps chauffant.

6. Dispositif chauffant pour désembueur selon une quelconque revendication précédente, comprenant en outre un connecteur pour connecter électriquement le conducteur électrique (30) à une alimentation électrique.

7. Dispositif chauffant pour désembueur selon la revendication 6, comprenant en outre des orifices de connexion (40) présentant des fils de connexion (42) dans le connecteur, les orifices de connexion se connectant électriquement aux extrémités (35, 38) du conducteur électrique.

8. Dispositif chauffant pour désembueur selon la revendication 6, présentant des points de contact aux extrémités (35, 38) du conducteur électrique et comprenant en outre des vis (48) traversant le connecteur (16) pour se connecter électriquement aux points de contact.

9. Désembueur comprenant un bouchon de désembueur (14) et un tube de désembueur (12) en communication fluidique avec le bouchon de désembueur, et à travers lequel circule de l'air, et un dispositif chauffant pour désembueur (10) selon une quelconque revendication précédente, situé dans le tube de désembueur.

10. Désembueur selon la revendication 9, comprenant en outre un dispositif de mise en prise destiné à venir en prise avec le dispositif chauffant.

11. Système d'évacuation des eaux usées comprenant un réservoir à eaux usées et un désembueur selon la revendication 9 ou 10 à une sortie du réservoir.
